# EUROPEAN PATENT SPECIFICATION

(11) **EP 0 610 180 B1**
(45) Date of publication and mention of the grant of the patent: **29.01.1997**
(21) Application number: 91914356.0
(22) Date of filing: 14.08.1991
(51) Int. Cl.: G07C 9/00

(54) **DOCUMENT SECURITY SYSTEM**
SICHERHEITSSYSTEM FÜR DOKUMENTE
SYSTEME DE SECURITE POUR DOCUMENTS

(30) Priority: 14.08.1990 GB 9017774; 07.09.1990 GB 9019544
(43) Date of publication of application: 17.08.1994
(73) Proprietor: JOHN MCLEAN & SONS (ELECTRICAL) DINGWALL LTD., Dingwall IV15 9TR, Scotland (GB)
(72) Inventor: MACDONALD, John, L., Inverness FV3 6QW, Scotland (GB)
(74) Representative: Naismith, Robert Stewart
(86) International application number: GB9101385
(87) International publication number: WO9203804

(56) References cited:
- EP-A- 0 334 616
- WO-A-82/04149
- WO-A-87/03724
- WO-A-89/00741
- FR-A- 2 449 930
- FR-A- 2 592 197
- IBM TECHNICAL DISCLOSURE BULLETIN. vol. 30, no. 8, January 1988, NEW YORK US page 366; 'FACIAL IMADE DATA ON CREDIT CARD FOR IDENTIFICATION'
- IBM TECHNICAL DISCLOSURE BULLETIN. vol. 31, no. 7, 7 December 1988, NEW YORK US pages 441 - 442; 'PERSONAL IDENTIFICATION TERMINAL'

## Description

The present invention relates to a security system for encoding documents such as cheque cards and credit cards with information to ensure that the documentation can be verified as authentic to prevent document fraud and the like. This invention is particularly, but not exclusively, intended to minimise cheque, cheque card and credit card fraud.

It is well known that document fraud, such as credit card frauds, cost several million pounds per annum both to the owners of the documents such as banks, and also to the customers. In addition, there is considerable police and court time devoted to the pursuit, apprehension and punishment of persons involved in the carrying out of such frauds.

WO 89/00741 and FR 2,592,197 describe methods for digitising a picture of a card user's face and/or his signature, compressing the resulting digitised data, and storing this data on the magnetic stripe of a credit card, for the purpose of preventing fraud.

EPO 334,616 describes a personal identification method which involves encrypting digital data, a part of which corresponds to user representative data, and storing that digital data onto the magnetic stripe of an identity document.

IBM Technical Disclosure Bulletin, Vol 31, No. 7, pages 441-442 describes an identification unit which comprises a LCD display for the purpose of displaying a card user's signature upon presentation of the card, the signature data being downloaded from a central clearing house.

An object of the present invention is to provide a security system and method which obviates or mitigates the above mentioned problem.

This is achieved by storing a unique signal representative of the user, such a signature, on the document in a digitised and compressed form which cannot be read by the unaided human eye and providing reading means for reading the hidden signal so that the stored signal can be compared with the actual signal.

According to one aspect of the present invention there is provided a security system for storing a digitised and compressed signature on a magnetic stripe and comprising means for setting the desired usage size of the signature, means for setting the level of digital data to fit into said desired signature size, scanning means for scanning the signature line by line, and magnetic stripe writing means for writing the compressed data onto said magnetic stripe, the apparatus being characterised by means for determining and removing multiple dots from the scanned image and storage means for storing a number of dots and a number of dot displacements, counting and storage means for counting and storing increment values and the number and position of stray dots, comparison means for comparing the total dot count in said compressed digital data with the digital data level, and scaling means for scaling the image size of the signature by the target or dot count in vertical and horizontal scales.

In a preferred arrangement, the signature of the user is provided magnetically encoded on a document, such as a cheque card or credit card. The signature cannot be read if the document falls into unauthorised hands. However, the encoded signature may be read at the point of use by a reading machine and displayed on a screen and compared with a stored signature or compared with the presenter's signature to verify the authenticity of the user.

Preferably the system comprises signal reading means including magnetic stripe reading means for reading the magnetically encoded information on the magnetic stripe and display means coupled to the signal reading means for visually displaying the decoded signal so that a comparison between the decoded signal and a further signal provided by the user may be made to verify the identity of the user. Preferably also, said magnetic stripe reading means is a card swipe machine and said display means is a LCD visual display for displaying the signal read from the document swiped through the card swipe machine.

Conveniently, a portrait of the user is also recorded by said signal recording means and digitised, and printing means are coupled to said computer for receiving said digitised portrait data and printing the portrait of said user on the document as well as the encoded signal to provided a further level of document security.

According to a further aspect of the invention there is provided a method of compressing a digitised image of a signature characterised by the steps of:
setting the desired image size of the signature and setting the level of digital data to fit into said desired image size;
scanning the digital image of the signature line by line;
on the first scan line removing multiple dots and storing a number of dots and a number of dot displacements; and
on the second and subsequent scan lines, for each stored dot on the previous line, counting and storing increments values, and counting and storing the number and position of stray dots;
comparing the total dot count in the compressed digital data with the digital data level;
scaling the image size of the signature by the dot count in the vertical and horizontal directions; and
repeating the above steps until the compressed digital data is less than the desired level.

Conveniently, a system embodying the invention includes a plurality of document reading means and displaying means disposed at remote locations, each document reading means and display means being a stand alone retrieval means for reading the digitised signal from the document and displaying the retrieval signal.

Conveniently also, each of said plurality of reading and display means are coupled to a central controller whereby the read signal can be electronically compared with a stored signal and both the stored and electronically read signals displayed for a visual comparison.

The image or signature is encoded in magnetically format onto the document and may be read using a magnetic scanner.

These and other aspects of the invention will become apparent from the following description when taken in combination with the accompanying drawings in which:-
Fig 1 is a schematic diagram of an embodiment of document security system in accordance with present invention;
Figs 2a,2b depict a credit card in accordance with an embodiment of the present invention with the users portrait on the front and the magnetic stripe with the encoded signature on the back.
Fig 3 is a diagrammatic example of a credit card printed with a portrait of a user and which carries a magnetically encoded signature using the system of Fig 1;
Fig 4 depicts a cheque card overprinted with a portrait of a user using the system of Fig 1; and
Fig 5 is a flow chart of a compression algorithm used with the system of Fig 1 to compress and store signature data on the magnetic stripe of a credit card.

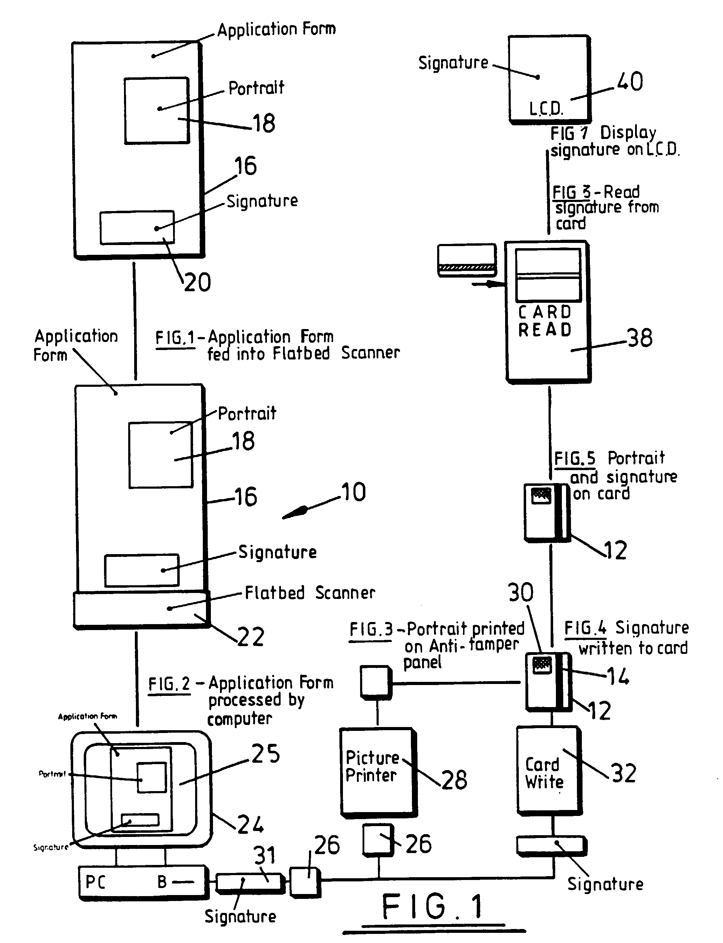

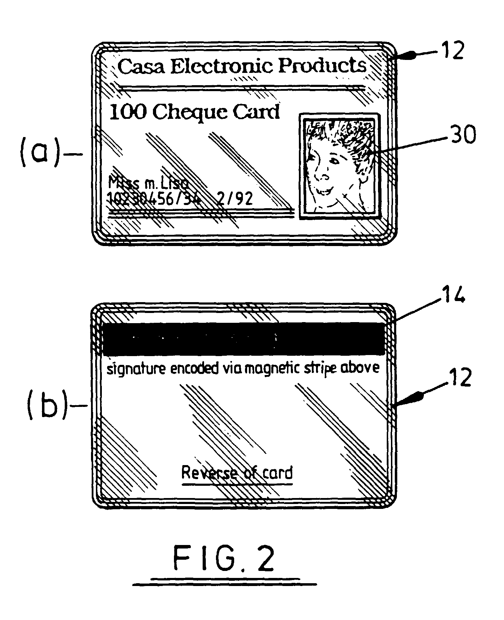

Reference is first made to Fig 1 of the drawings which depicts a document security system, generally indicated by reference numeral 10, for incorporating a portrait of the user onto the point of a credit card 12 and the user's signature, invisible to the human eye, onto the magnetic stripe 14 on the reverse side of the card, best seen in Figs 2a,2b, as will be later described in detail.

In the system 10, in order to create a secure card 12 a user who wishes such a card completes an application form 16 by including a self-portrait 18 such as a passport-type photograph and also his signature 20. The completed application form 16 is fed into a flatbed image scanner 22 (type M3094 E/P, Fujitsu Limited) which digitises the image data at a fast scanning rate of 200 dots (pixels)/inch resolution in line-art format. The portrait 18 is digitised using grey scale or colour. The digitised data is fed to a personal computer 24 (Apple MacIntosh) which displays the digitised signature on the screen 25. In this format there is far too much data, perhaps 8-20K bytes of data in the signature alone, for it to be recorded onto magnetic card stripe.

The digitised portrait information 26 is fed to a picture printer 28 for printing the users portrait on a anti-tamper panel 30 on the front of the credit card 12. The signature 20 is compressed into 160 bytes or less of information as will be later described and the compressed signature data 31 is fed to a magnetic card write machine 32 which writes the compressed data onto certain available tracks on the magnetic stripe 14. In the present case the data is written onto 2 tracks, track 0 and track 4, but this may be varied depending on the particular application. The standard credit card is 8,57 cm (3.375") wide and the magnetic stripe 14 is the same width. Thus, the data is compressed to fit the magnetic strip width so that for each track there are approximately 200 bits per inch; this is why two tracks are needed to hold 160 bytes of compressed data. It will be appreciated that one byte of the 160 bytes is used as a check sum byte to ensure that data is correctly written to the card or document.

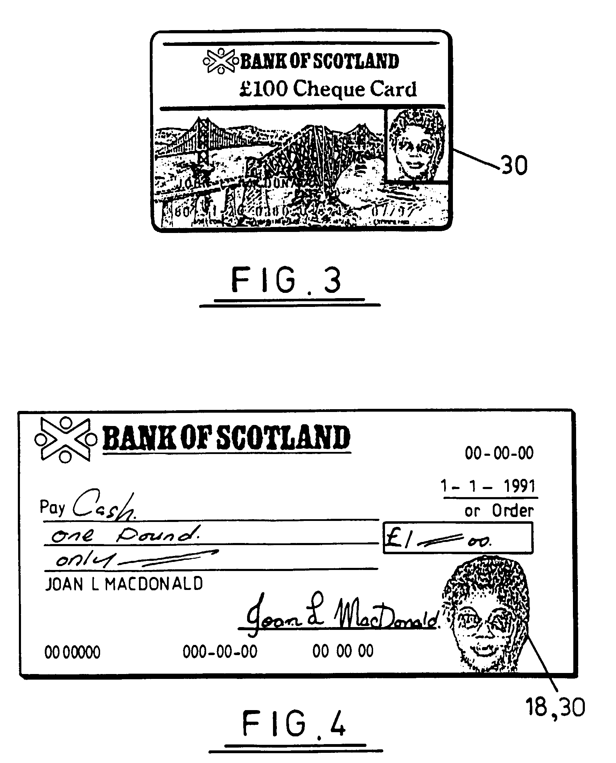

Thus, the security coded credit card 12 contains the users portrait 18 on a tamper-proof panel 30 and the users signature electronically compressed and stored magnetically on tracks 0 and 4 of the magnetic stripe 14 as seen in Figs 2a,2b and Fig 3. Similarly, the portrait 18 without the signature may be printed onto personal cheques as shown in Fig 4.

In order to use the card and ensure that the user is authentic, the card is presented to a point of sale position, e.g. the teller in a bank. The teller takes the card and firstly views the card portrait and compares it with the user before him. The card is then passed through a card reader such as a card swipe machine 38 which has a small LCD T.V. type display 40 coupled thereto. The card read-write machine is not ISO standard having been modified by the addition of switches and firmware inside so that 8 bits can be written to any of the tracks. The users compressed signature is firstly decoded from the tracks and displayed to the teller only on the LCD T.V. type display 40. When the user signs a cheque or other document the teller then compares his actual signature with the card-stored signature and, if satisfied as to the authenticity of the vendor, permits the transaction to be completed. Should the signatures be sufficiently different to cause doubt as to the user's authenticity the vendor may terminate the transaction.

Thus, it will be appreciated that because the signature is invisible to the human eye it cannot be forged and the chances of a fraudulent user being able to sign a duplicate signature to the card-stored signature is negligible. The provision of the users portrait on the credit card further enhances security.

A further level of security may be provided by encoding the digitised portrait or signature to form a scrambled signal and to print the scrambled signal on the cheque, cheque card or other document. At the time of use, the user signs the cheque in the usual way. The scrambled signature cannot be read except by the teller who can "read" the scrambled code with a machine having a decryption algorithm. The teller is thus able to compare the scrambled signal, respresentative of portrait or signature, with the stored information. This means that the teller has access to a device either retrieving the unscrambled data from master storage unit or for reading the scrambled information on the document and descrambling it so that a comparison can be made at the point of use.

As described above, a particularly convenient solution to the problem is achieved by printing an unscrambled portrait of the user on the document or card as shown on Figs 2, 3 and 4 for ease of immediate comparison and also providing an unscrambled signal representative of the signature of the user on the card. With existing technology, this comparison can be readily effected in most stores or businesses where document verification is required.

The personal computer 24 and card reader 38 may be connected by a suitable network or other suitable link to a distributed group of computers or terminals which have access to the stored information.

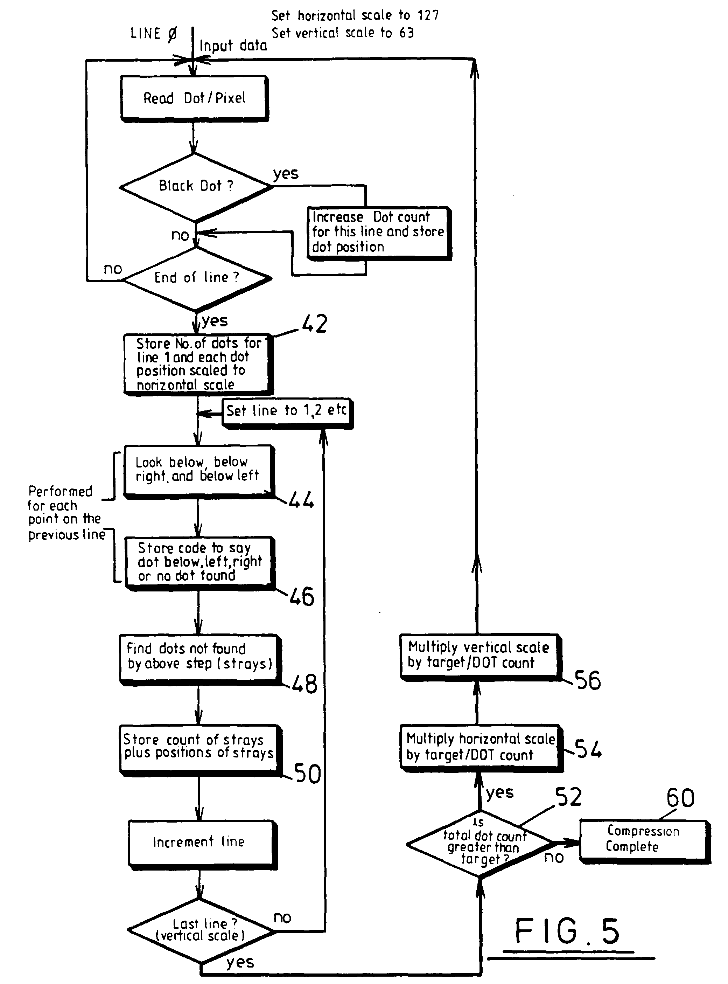

Reference is now made to Fig 5 of the drawings which depicts a flow chart of the compression technique used with the system of Fig 1 to compress the data digitised by the flatbed image scanner 22 to a sufficiently small number of bytes, in our case 160 bytes, to fit onto 2 tracks of the magnetic stripe 14 on the credit card 12, but which, when read, will display clearly a legible facsimile of the actual signature of the user. In practice, the compression technique has to reduce the scanned 200 dots/inch image occupying 8-20K bytes of file space to 160 bytes. The technique parameters could be raised to accommodate higher byte capacities to suit tracks being developed with higher bit densities, for example, 420 BPI instead of 210 BPI. Alternatively, an additional track may be added to the magnetic stripe 14 to receive compressed data.

The encoding of magnetic stripe is well established and is not disclosed here. Reference is made to an article in Auto ID Today by Sjoerd P. Wouda entitled Magnetic Strip Technology (Vol. 7, June 1989). Because space on each track is limited the compressed data is stored in bit fields which do not fall necessarily on bit boundaries. For example, a 5-bit field could be stored as 3 bits in one byte and 2 bits in the next byte so that no bits are wasted.

Compression of the scanned data is achieved by using the fact that the raster scanned image data is stored as a number of lines of dots. The stored data is first processed, one line at a time, to remove multiple dots which are next to each other as some of these are redundant. For example, a typical pen width at 200 dots/inch scanning results up to 15 to 20 bits in the scanned image and these "multiples" are removed. In addition, the compression technique makes use of the fact that the data in a scanned signature is not random. For example, in a scanned signature if a dot is encountered in one line, then it is likely that a dot will be found on the next line either directly below or slightly to the right or left. This is resolved down to four possibilities; a dot below, a dot one space left, a dot one space right or none of these and these four possibilities are represented by 2 bits.

Referring to Fig 5, when starting with the first line (line 0) in the image there is a bit field 42 to store a number of points, then a number of bit fields which give the distance to the first point, the distance from the last point to the current point etc. By using the increments algorithm there will be as many increments on the next line (line 1) as points on line so that there is no need for any increment count. Line 1 is therefore scanned 44 for increments and store 46, and then re-scanned 48 to detect any points, called strays, which are not picked-up as increments, and then a further line is encoded in the same format as line 1 with a dot count field plus as many dot displacement fields 50. Thus, line 1 is stored as a dot count plus a bit of dot displacements one line 2 and subsequent lines are stored as a number of increments, each increment being encoded on 2 bits, with the number of increments being the same as the number of dots on the previous line, plus the number of strays and the displacements of those strays.

It is desired to reduce the data to 160 bytes, i.e. 1280 bits and the actual scanned image may contain perhaps 2-300 lines and 6-800 columns. In practice best results have been obtained when this image is scaled down to a maximum of 63 lines by 127 columns. Vertical and horizontal scales are first picked (Fig 4) which match these values and then the image is scanned and compressed. The number of bits in the scanned image is then compared 52 with the target, i.e. 1280 bits in this example. If the number of compressed image bits is greater than the target number of bits, then the number of horizontal and vertical scan lines is scaled down by the number of allowable (target) bits to actual bits 54,56 (target/dot count _{HOR}; target/dot count _{VERT}) so that the target number of bits is obtained in two or three iterations. If the number of compressed image bits is less than the target number, the compression is complete.

The technique contains several optimisation features, one of which is that the bit fields are reduced in size from the theoretical minimum to save space. For example, because more than 15 strays are rarely encountered on one line, the count of strays is encoded on 4 bits only. If there is a stray count >15 in the 4-bit field, 15 is put in the 4-bit field and then the next 6-bit field is used for the full stray count. Therefore, on that particular line storage capacity has been lost, but overall the technique has saved 5 to 10% of storage. The same technique is also applied to the storage of displacements on a line.

It will be understood that various modifications may be made to the embodiment herebefore described before departing from the scope of the invention. In the apparatus described, for example, a video camera could be used for taking portraits and the image scaled to provide a digitised portrait. Alternatively, a still photograph or signature could be digitised using a digitising tablet. In addition, the flatbed image scanner 22 may be used to digitise a picture of the fingerprint of a user to provide a unique signal representative of that user and this signal compressed using a similar technique described with reference to the signature. A similar compression technique may be used to compress the portrait data. The compressed data may be optically encoded onto the document and read by an optical card reader (OCR) using existing OCR technology. The photograph and/or image of the user may be located on the signature strip on a credit card and the scrambled code may be contained in a medium which can be decoded by an optical scanner or magnetic scanner.

The laser printer may be replaced by any other suitable digitally controlled printer such as an ink-jet printer or electro-static printer. In addition, it is not necessary for other remote terminals to be directly connected to a master computer which stores all the information or a stand-alone reader to compare the presenters signature with that which is encoded. The remote terminals may be connected by a modem. The information may be stored on a disc which may be sent to a remote location and inserted into an appropriate host terminal which has software to enable the comparisons of portrait and encoded signature to be made with the presenters signature. Signatures or portraits could also be faxed to remote locations from a central location to facilitate verification. It will be understood that document is a general term applicable to a variety of objects such as credit cards, smart cards, chargecards, cheques, cheque guarantee cards, files, folders, I.D. cards, security access cards and any other suitable document where it is desirable to ensure the authenticity of the user and prevent fraud.

Advantages of the present invention are that there are extra levels of security to enable verification of the user to take place and that the comparison is effected on the basis of characteristics which are believed to be unique to the user, for example, the portrait signature, fingerprint or combinations of these. Thus, the opportunity for forgery or fraud in connection with such documentation is considerably minimised. The system uses existing technology and is designed to interface with existing systems, thus it can readily be set up in existing environments without specialist expertise.

In the case of a smart card, i.e. one that has a processor and storage means, the signature and portrait could be contained in the storage means therein.

## Claims

1. A security system for storing a digitised and compressed signature on a magnetic stripe (14) and comprising means (24) for setting the desired usage size of the signature, means (24) for setting the level of digital data to fit into said desired signature size, scanning means (22) for scanning the signature line by line, and magnetic stripe writing means (32) for writing the compressed data onto said magnetic stripe (14), the apparatus being characterised by means (24) for determining and removing multiple dots from the scanned image and storage means (24) for storing a number of dots and a number of dot displacements, counting and storage means (24) for counting and storing increment values and the number and position of stray dots, comparison means (24) for comparing the total dot count in said compressed digital data with the digital data level, and scaling means (24) for scaling the image size of the signature by the target or dot count in vertical and horizontal scales.

2. System according to claim 1 and arranged to compress the signature to 160 bytes or less.

3. A security system according to claim 1 or 2 and comprising magnetic stripe reading means (38) for reading the magnetically encoded information on the magnetic stripe (14), and display means (40) coupled to the stripe reading means (38) for visually displaying the decoded signal so that a comparison between the decoded signal and a further signal provided by the user may be made to verify the identity of the user.

4. A security system according to claim 3, wherein the magnetic stripe reading means (38) is a card-swipe machine and the display means (40) is a LCD visual display for displaying the signal read from the document swiped through the card-swipe machine.

5. A security system according to claim 3 or 4 and comprising data encryption means (24) for encrypting the digital data prior to writing the digital data onto the magnetic stripe (14), the magnetic stripe reading means (38) including data decrypting means for decrypting the encrypted data stored on the magnetic stripe.

6. A security system according to any one of the preceding claim, wherein the magnetic stripe (14) is held on a credit card, cheque card or smart card.

7. A security system according to any of the preceding claims, wherein the scanning means (22) is also arranged to scan a portrait of a user and the system comprises printing means (28) for receiving the digitised portrait data and for printing the portrait of the user onto a document holding said magnetic stripe (14) to provide a further level of security.

8. A security system according to claim 7, wherein the portrait is contained in a tamper-proof panel on the document.

9. A security system according to any one of the preceding claims, wherein the user's signature is encoded onto two tracks of the magnetic stripe (14).

10. A method of compressing a digitised image of a signature characterised by the steps of:
setting the desired image size of the signature and setting the level of digital data to fit into said desired image size;
scanning the digital image of the signature line by line;
on the first scan line removing multiple dots and storing a number of dots and a number of dot displacements;
on the second and subsequent scan lines, for each stored dot on the previous line, counting and storing increments values, and counting and storing the number and position of stray dots;
comparing the total dot count in the compressed digital data with the digital data level;
scaling the image size of the signature by the dot count in the vertical and horizontal directions; and
repeating the above steps until the compressed digital data is less than the desired level.

11. A method of verifying the authenticity of the user of a document, the method comprising:
storing a compressed, digitised, signature of a user obtained by the method of claim 10 onto a magnetic stripe on a document;
reading the stored signal from the document with a stand alone reading means; and
displaying the read signal so that the read signal can be compared with an actual signal provided by the presenter or user of the document to allow verification of the authenticity of the user.

## Patentansprüche

1. Sicherheitssystem zur Speicherung einer digitalisierten und komprimierten Unterschrift auf einem Magnetstreifen (14), das folgende Komponenten aufweist: Mittel (24), um die gewünschte Nutzungsgröße der Unterschrift zu bestimmen. Mittel (24), um den Pegel der digitalen Daten zu bestimmen, damit diese in die gewünschte Unterschriftengröße passen, Abtastmittel (22), um die Unterschrift Zeile für Zeile abzutasten, und Magnetstreifen-Schreibmittel (32), um die komprimierten Daten auf den Magnetstreifen (14) zu schreiben, wobei das System gekennzeichnet ist durch ein Mittel (24) zum Feststellen und Entfernen von Mehrfachpunkten von dem abgetasteten Bild und Speichermittel (24), um eine Anzahl der Punkte und eine Anzahl der Punktverschiebungen zu speichern, durch ein Zähl- und Speichermittel (24) zum Zahlen und Speichern von inkrementalen Werten und der Anzahl und Position von gestreuten Punkten. durch ein Vergleichsmittel (24) zum Vergleichen der Zählung der Gesamtzahl der Punkte in den komprimierten digitalen Daten mit dem digitalen Datenpegel. und durch ein Skalierungsmittel (24) zum Skalieren der Bildgröße der Unterschrift im senkrechten und waagerechten Maßstab durch die Ziel- oder Punktezählung.

2. System nach Anspruch 1, das so aufgebaut ist, daß die Unterschrift auf 160 Bytes oder weniger komprimiert wird.

3. Sicherheitssystem nach Anspruch 1 oder 2, das ein Magnetstreifen-Lesemittel (38) zum Lesen der magnetisch kodierten Informationen auf dem Magnetstreifen (14) und ein Anzeigemittel (40) umfaßt, das mit dem Magnetstreifen-Lesemittel (38) gekoppelt ist, um das dekodierte Signal visuell darzustellen, so daß ein Vergleich zwischen dem dekodierten Signal und einem weiteren Signal, das vom Benutzer eingegeben wird, vorgenommen werden kann, um die Identität des Benutzers zu überprüfen.

4. Sicherheitssystem nach Anspruch 3, bei dem das Magnetstreifen-Lesemittel (38) ein Karten-Einzugsgerät ist und das Anzeigemittel (40) eine visuelle Flüssigkristallanzeige ist. um das Signal anzuzeigen, das von dem Dokument gelesen wird, das durch das Karten-Einzugsgerät hindurch geführt wird.

5. Sicherheitssystem nach Anspruch 3 oder 4, das ein Daten-Verschlüsselungsmittel (24) einschließt, um die digitalen Daten zu verschlüsseln, bevor die digitalen Daten auf den Magnetstreifen (14) geschrieben werden, wobei das Magnetstreifen-Lesemittel (38) ein Daten-Entschlüsselungsmittel einschließt, um die auf dem Magnetstreifen gespeicherten, verschlüsselten Daten zu entschlüsseln.

6. Sicherheitssystem nach einem der vorhergehenden Ansprüche, bei dem sich der Magnetstreifen (14) auf einer Kreditkarte, Scheckkarte oder einer Chipkarte befindet.

7. Sicherheitssystem nach einem der vorhergehenden Ansprüche, bei dem das Abtastmittel (22) außerdem so aufgebaut ist, daß es das Porträt eines Benutzers abtasten kann, und das System umfaßt ein Mittel zum Drucken (28). um die digitalisierten Porträtdaten zu empfangen und um das Porträt des Benutzers auf ein Dokument zu drucken, auf dem sich der Magnetstreifen (14) befindet, um ein weiteres Maß an Sicherheit zu schaffen.

8. Sicherheitssystem nach Anspruch 7, bei dem sich das Porträt in einem gegen Eingriffe gesicherten Feld auf dem Dokument befindet.

9. Sicherheitssystem nach einem der vorhergehenden Ansprüche, bei dem die Unterschrift des Benutzers auf zwei Spuren des Magnetstreifens (14) kodiert ist.

10. Verfahren zum Komprimieren des digitalisierten Abbilds einer Unterschrift. gekennzeichnet durch die folgenden Schritte:
Festlegen der gewünschten Bildgröße der Unterschrift und Festlegen des Pegels der digitalen Daten, damit diese in die gewünschte Bildgröße passen;
zeilenweises Abtasten des digitalen Abbilds der Unterschrift:
auf der ersten Abtastzeile Entfernen von Mehrfachpunkten und Speichern einer Anzahl der Punkte und einer Anzahl der Punkteverschiebungen:
auf der zweiten und den folgenden Abtastzeilen Zählen und Speichern von inkrementalen Werten für jeden Punkt. der auf der vorangegangenen Zeile gespeichert ist, und Zählen und Speichern der Anzahl und der Position von gestreuten Punkten;
Vergleichen der Zählung der Gesamtzahl der Punkte in den komprimierten digitalen Daten mit dem digitalen Datenpegel;
Skalieren der Bildgröße der Unterschrift durch Punktezählung in der senkrechten und der waagerechten Richtung: und
Wiederholen der oben genannten Schritte, bis die komprimierten digitalen Daten geringer als der gewünschte Pegel ist.

11. Verfahren zur Prüfung der Authentizität des Benutzers eines Dokuments, wobei das Verfahren folgende Schritte umfaßt:
Speichern einer komprimierten, digitalisierten Unterschrift eines Benutzers. die nach dem Verfahren nach Anspruch 10 erstellt worden ist, auf einem Magnetstreifen auf einem Dokument;
Auslesen des gespeicherten Signals von dem Dokument mit Hilfe eines selbständigen Lesemittels; und
Darstellen des gelesenen Signals, so daß das gelesene Signal mit einem tatsächlichen Signal verglichen werden kann, das vom Vorleger oder Benutzer des Dokuments erbracht wird, um die Prüfung der Authentizität des Benutzers zu ermöglichen.

## Revendications

1. Système de sécurité pour l'enregistrement d'une signature numérisée et comprimée sur une barre magnétique (14). comprenant un moyen (24) pour régler la taille d'utilisation désirée de la signature, un moyen (24) pour régler le niveau des données numériques en vue de leur adaptation dans ladite taille désirée de la signature. un moyen de balayage (22) pour balayer la signature ligne par ligne, et un moyen d'écriture sur la barre magnétique (32) pour écrire les données comprimées sur ladite barre magnétique (14). le dispositif étant caractérisé par un moyen (24) servant à déterminer et à supprimer des points multiples sur l'image balayée, un moyen d'enregistrement (24) pour enregistrer un certain nombre de points et un certain nombre de déplacements de points, un moyen de comptage et d'enregistrement (24). pour compter et enregistrer des valeurs incrémentielles et le nombre et la position de points parasites, un moyen de comparaison (24). pour comparer le nombre total de points comptés dans lesdites données numériques comprimées avec le niveau des données numériques, et un moyen de mise à l'échelle (24) pour mettre à l'échelle la taille de l'image de la signature en fonction de l'objectif ou des points comptés dans les échelles verticale et horizontale.

2. Système selon la revendication 1, agencé de sorte à comprimer la signature à 160 bytes ou moins.

3. Système de sécurité selon les revendications 1 ou 2, comprenant un moyen de lecture de la barre magnétique (38) pour lire les informations à codage magnétique sur la barre magnétique (14). et un moyen d'affichage (40) couplé au moyen de lecture de la barre magnétique (38) pour afficher visuellement le signal décodé. de sorte à permettre une comparaison entre le signal décodé et un autre signal fourni par l'utilisateur pour vérifier l'identité de l'utilisateur.

4. Système de sécurité selon la revendication 3, dans lequel le moyen de lecture de la barre magnétique (38) est un lecteur de carte, le moyen d'affichage (40) étant un affichage visuel à cristaux liquides destiné à afficher le signal lu sur le document passé à travers le lecteur de carte.

5. Système de sécurité selon les revendications 3 ou 4, comprenant un moyen de cryptage des données (24) pour crypter les données numériques avant l'écriture des données numériques sur la barre magnétique (14), le moyen de lecture de la barre magnétique (38) englobant un moyen de décryptage des données pour décrypter les données cryptées enregistrées sur la barre magnétique.

6. Système de sécurité selon l'une quelconque des revendications précédentes, dans lequel la barre magnétique (14) est appliquée sur une carte de crédit, une carte-chèque ou une carte à puce.

7. Système de sécurité selon l'une quelconque des revendications précédentes. dans lequel le moyen de balayage (22) sert aussi à balayer un portrait d'un utilisateur, le système comprenant un moyen d'impression (28) pour recevoir les données du portrait numérisées et pour imprimer le portrait de l'utilisateur sur un document comportant ladite barre magnétique (14). pour fournir un niveau de sécurité supplémentaire.

8. Système de sécurité selon la revendication 7, dans lequel le portrait est contenu dans un panneau anti-manipulations sur le document.

9. Système de sécurité selon l'une quelconque des revendications précédentes, dans lequel la signature de l'utilisateur est codée sur deux pistes de la barre magnétique (14).

10. Procédé de compression d'une image numérisée d'une signature. caractérisé par les étapes ci-dessous:
réglage de la taille désirée de l'image de la signature et réglage du niveau des données numériques en vue de leur adaptation dans ladite taille désirée de l'image:
balayage ligne par ligne de l'image numérique de la signature: suppression sur la première ligne de balayage de points multiples et enregistrement d'un nombre de points et d'un nombre de déplacements de points:
comptage et enregistrement de valeurs incrémentielles sur la deuxième ligne de balayage et les lignes de balayage suivantes, ainsi que comptage et enregistrement du nombre et de la position de points parasites:
comparaison du nombre total de points comptés dans les données numériques comprimées avec le niveau des données numériques;
mise à l'échelle de la taille de l'image de la signature par comptage des points dans les directions verticale et horizontale; et
répétition des étapes ci-dessus jusqu'à ce que les données numériques comprimées soient inférieures au niveau désiré.

11. Procédé de vérification de l'authenticité d'un utilisateur d'un document, le procédé comprenant les étapes ci-dessous:
enregistrement d'une signature comprimée et numérisée d'un utilisateur, obtenue selon la procédé de la revendication 10, sur une barre magnétique sur un document;
lecture du signal enregistré sur le document avec un moyen de lecture séparé; et
affichage du signal lu, de sorte que le signal lu peut être comparé avec un signal effectif fourni par le présentateur ou l'utilisateur du document pour permettre la vérification de l'authenticité de l'utilisateur.
